(19) Europäisches Patentamt
European Patent Office
Office européen des brevets

(11) **EP 0 562 080 B1**

(12) **EUROPEAN PATENT SPECIFICATION**

(45) Date of publication and mention
of the grant of the patent:
**05.03.1997 Bulletin 1997/10**

(21) Application number: **92920831.2**

(22) Date of filing: **08.10.1992**

(51) Int Cl.6: **C09B 67/28**, C09B 67/30

(86) International application number:
**PCT/EP92/02319**

(87) International publication number:
**WO 93/07221 (15.04.1993 Gazette 1993/10)**

(54) **SULPHUR DYE COMPOSITIONS AND THEIR PRODUCTION**

SCHWEFELFARBSTOFFZUBEREITUNGEN SOWIE IHRE HERSTELLUNG

COMPOSITIONS DE COLORANTS AU SOUFRE ET LEUR PRODUCTION

(84) Designated Contracting States:
**AT CH DE ES FR GB IT LI**

(30) Priority: **11.10.1991 US 775672**

(43) Date of publication of application:
**29.09.1993 Bulletin 1993/39**

(73) Proprietor: **Clariant Finance (BVI) Limited
Road Town, Tortola (VG)**

(72) Inventor: **MESZAROS, Laszlo, A.
Mt.Gilaed, NC 27306 (US)**

(74) Representative: **D'haemer, Jan Constant
Clariant International Ltd.,
Rothausstrasse 61
4132 Muttenz 1 (CH)**

(56) References cited:
GB-A- 327 864          GB-A- 2 201 165
GB-A- 2 228 490          US-A- 2 893 994

## Description

This invention relates to aqueous solutions of reduced sulphur dyes, to aqueous compositions containing sulphur dyes in finely divided solid particulate form prepared from such solutions, to dried sulphur dye compositions and to processes for producing such products and for their use.

In the preparation of aqueous sulphur dye dispersions the sulphur dyes to be dispersed may be separated from the salts which accompany their production by a process which employs washing and filtration. For the purpose of such filtration, the more uniform the particle size, i.e. the narrower the particle size distribution, the better. It is also desirable that the sulphur dye be in the form of finely divided particles. The minimum particle size is dictated mainly by the pore size of the filter used for the filtration, since particles which are too small will either pass through the pores and be lost or they will clog up the pores and hinder the filtration process. The maximum particle size is dictated mainly by the ultimate uses in the dyeing of textiles; oxidized sulphur dyes whose particle size does not exceed 4 μm are particularly well suited for this use, especially when environment-friendly reducing sugars, such as glucose, are to be employed as reducing agents during the dyeing process. Dyes of such small particle size are also less likely to contain entrapped inorganic salts which might e.g. not be effectively removed by the filtration treatment and whose presence might adversely affect the dyeings made with such dyes. It is often desired or necessary to subject oxidized sulphur dyes of larger particle size or of a broad size range comprising particles of larger size, to a particle size reduction treatment. This can occasionally be achieved to a satisfactory degree by the use of a high shear pump during a microfiltration procedure, but it is sometimes necessary to carry out a milling step. Some sulphur dyes, in the oxidized state in which they are obtained from their conventional manufacturing processes, may comprise particles which, due to their hardness, require extensive milling in order to achieve a satisfactory particle size as described above. The resulting consumption of time and energy can add significantly to the cost or producing dispersions of such dyes. With some oxidized sulphur dyes prepared according to known methods it is difficult to prepare an aqueous dispersion of high enough concentration to achieve a commercially acceptable colour strength, because such dispersions tend to be too thick and difficult to pour.

USA patent 2,893,994 deals with the plain reduction of vat dyes to a soluble form, which is then reoxidized under defined conditions of dynamic agitation (dispersion) of the reaction mixture, in order to obtain a finely divided reoxidized form. The concerned dyes are plain vat dyes, i.e. such dyes that contain reducible carbonyl groups, mostly two quinonic carbonyl groups that are part of a same conjugated system, and in which, in order to obtain the leuco form, the quinonic carbonyl groups are reduced to the corresponding hydroquinonic hydroxy groups, and these are then reoxidized to the corresponding quinonic groups in the second phase of the process. In vat dyes that contain a single sulphur as a member of a heterocycle, this is normally not reduced, respectively the heterocycle is not opened, when stepping to the leuco form. However, when dealing with real sulphur dyes, i.e. those containing oligosulphide bridges that are directly involved in the reduction to the leuco form and reoxidation to the sulphur dye form, and/or also heterocyclic rings containing such oligosulphide chains as ring members, these oligosulphide bridges are opened in the reduction to form thiol groups and, depending on the amount of sulphur in the dye, there may result disturbing components when reoxidizing to the sulphur dye form, so that this may contain a disturbing amount of sulphur which may cause difficulties in handling and working and/or in dyeing may lead to a deterioration of the dyed fibre (= tendering), and/or it may display unsatisfactory physical properties (such as hardness and/or particle-size-distribution) of the reoxidized sulphur dye particles or may lead to a too high viscosity of the final dispersion. This particular problem is not mentioned in the cited USA-patent 2,893,994 and much less there is any suggestion for solving this problem. The invention described and claimed in the instant patent solves exactly this problem, especially in the case of bound excess sulphur or/and free sulphur present in the dye.

It has now been found that oxidized sulphur dyes can be obtained in the form of finely divided particles which are of an improved character by virtue of being of more uniform particle size and/or of a size which is suitable for use in dyeing with less milling than has previously been required or with no milling at all. Furthermore, the particles are sufficiently soft to permit easy and economical size reduction of any oversized particles and they can be processed into aqueous dispersions (also pastes) which are easily pourable.

The process of the present invention comprises the steps of

(1) treating a starting sulphur dye (I), that contains an aromatically bound oligosulphide bridge reducible to thiol groups and may contain bound excess sulphur and/or free sulphur, in an amount of a non-sulphide reducing agent-containing aqueous reducing medium which is effective to reduce it and produce a solution of the reduced sulphur dye (II), which can be oxidized to form an aqueous slurry (IV) of precipitated solid particles of the oxidized sulphur dye (III) which are more uniform in size and/or softer and/or of smaller average particle size than and/or which contain less bound excess sulphur and/or free sulphur than (I) or than particles obtainable by oxidizing an aqueous composition of the starting dye (I),

and (2) oxidizing the solution obtained in step (1) to produce said slurry (IV) of precipitated solid particles of the oxidized sulphur dye (III).

As "sulphur dyes" there are meant here in general conventional dyes known under this concept and as defined e.g. as "Sulphur Dyes" and "Sulphurized Vat Dyes" in VENKATARAMAN "The Chemistry of Synthetic Dyes" Vol. II (Chapters XXXV and XXXVI) (1952) and Vol. VII (1974) or as defined e.g. in the "Colour Index" as "Sulphur Dyes" and also as "Vat Dyes" with the further indication "sulphur" and/or with a structure number and a synthetic method involving a sulphurization. Essentially they are dyes that contain aromatically bound oligosulphide bridges that are reducible to thiol groups and may optionally be of oligomeric to polymeric structure. They are essentially free of solubilizing sulpho groups (also of thiosulphonic groups).

As "(pre)reduced sulphur dye" or "(pre)reduced sulphur dye (II)" there is meant here a sulphur dye or a sulphur dye (I) which has been reduced as described herein to such a degree as to be soluble or dissolved in the alkaline aqueous reduction medium in which it has been produced. As "reduced sulphur dye (II)" there is in particular also meant a sulphur dye (I) which has been reduced to such a degree as to be in the monochromophoric stage.

As "oxidized sulphur dye" or "oxidized sulphur dye (III)" there is meant herein a sulphur dye as defined above, in particular as obtained by oxidation of the respective (pre)reduced sulphur dye.

The starting dye (I) for the process of this invention can be any sulphur dye preferably a sulphur dye prepared by a thionation reaction but not treated according to step (1) above and having at least one of the characteristics 1, 2 and 3 listed below. Sulphur dyes (including sulphurized vat dyes) are well known in the art and conventional methods of producing them are described in the Colour Index. The dye (I) is preferably employed in the crude form in which it is obtained from its conventional method of production, more preferably as fresh crude which has been recently produced, preferably no more than one week, particularly less than four days previously.

Characteristics 1, 2 and 3 are as follows:

1. The dye is at least partially in water-insoluble solid form, especially in the form of solid particles which are less uniform than is desired and/or whose average size is so large (e.g. greater than 8 μm, typically 10 to 80 μm) as not to be ideally suited, as such, for dyeing cotton in the presence of a reducing sugar as the reducing agent, particularly where such particles are of a hardness which would require extensive milling to achieve a suitable size. In this regard, particle size is preferably as may be determined by laser light diffraction using a "Malvern Mastersizer" Model MS 1002 by Malvern Instruments, Malvern, England.

2. The dye contains an undesirably high amount of bound excess sulphur. By "bound excess sulphur" is meant one or more sulphur atoms in excess of the sulphur atom of a thiol group which are part of a linear chain covalently attached to the chromophore of the dye and forming a linkage between said chromophore and said thiol group, e.g. as in $D-S-(S)_x-Na$ where D is the chromophore and x is a figure indicating the bound excess sulphur and which may in particular be 0 or 1. Bound excess sulphur can be reduced to sulphides by the treatment of the dye according to step (1) of the process of the invention and this causes an increase in the reduction equivalent of the reaction mixture. The term "reduction equivalent" (hereinafter "RE") is used to designate the value which can be readily determined by a person skilled in the art by potentiometric titration with an ammoniacal cupric sulphate solution of known normality, preferably 0.1N or 0.2N, and is in particular the number of milliliters of 0.1N cupric ammonium sulphate solution consumed per gram of sample to reach the equivalence point. An equivalence point or end point of -200 mV has been found effective when using either a METTLER DL 70 Autotitrator with a DM 140-SC electrode or a FISHER Titration Buret No. 455 with a platinum electrode, a FISHER Stirrer No. 460 and a FISHER Titration Printer Plotter No. 465. Another indication of the presence of bound excess sulphur is the viscosity of a dispersion of sulphur dye (III) which has been obtained by solubilizing reduction of (I) to (II) and precipitation by oxidation as described above and then filtered, e.g. by microfiltration, and processed into an aqueous dispersion. By "an undesirably high amount of bound excess sulphur" is meant such an amount as will cause dye (III) in the form of an aqueous slurry (IV) or dispersion (V) to form pastes which are too thick or become too thick on standing, unless a sufficient amount of the bound excess sulphur is removed by a treatment according to this invention. The presence of bound excess sulphur can also be determined analytically by calorimetric titration with sodium cyanide. When sodium cyanide is added to an aqueous solution of a dyestuff containing bound excess sulphur an exothermic reaction takes place. To determine the amount of bound excess sulphur a sample of the aqueous dye composition to be tested, typically 50 g crude starting dye (I) diluted with water to 125 g, is adjusted to a pH above 8 in an insulated vessel and sodium cyanide is added with stirring in one gram increments until there is no longer any increase in temperature caused by such an addition. The dry weight of the sample in grams (g. sample) and the total number of grams of sodium cyanide (g. NaCN) which caused a temperature rise are determined and the percentage of bound excess sulphur (% S) based on the dry weight of the dye is calculated according to the equation:

$$\frac{(g.\ NaCN) \times 32 \times 100}{49 \times (g.\ sample)} = \% \ S$$

3. The dye (I) contains an undesirably high amount of free (elemental) sulphur, e.g. sulphur which may not have reacted during the preparation of the polysulphide used in the thionation reaction whereby the dye was produced. Since free sulphur, like bound excess sulphur, is converted to sulphide by the appropriate reducing medium, its presence is also indicated by an increase in RE during the reduction step. If an insufficient amount of the free sulphur is eliminated by the reduction step, this also causes the final dye dispersion to be too thick. The presence of free sulphur can also be determined analytically, for example by extracting the free sulphur from a sample of dye using carbon disulphide and then comparing the thus-obtained solution with standard solutions of various concentrations of sulphur in carbon disulphide using, for instance, an HP 5988A Mass Spectrometer with a direct insertion probe.

The process of this invention is particularly advantageous for treating dyes which have at least one of characteristics 2 and 3 as well as dyes having characteristic 1 and characteristic(s) 2 and/or 3. Dyes which can be improved by treatment according to this invention include C.I. Sulphur Blacks 1 and 2, C.I. Sulphur Blues 7 and 13, C.I. Sulphur Browns 10 and 31, C.I. Sulphur Green 2, C.I. Sulphur Yellow 1 and C.I. Vat Blue 43, especially C.I. Sulphur Black 1.

The aqueous reducing medium should preferably contain enough reducing agent to reduce all of the non-reduced dye (I) present in a thionation reaction product and produce an aqueous solution from which the dissolved dye (II) can be precipitated by oxidation to form particles of dye (III) having at least one of the aforementioned improved properties of softness, smaller average particle size, more uniform particle size and decreased content of bound excess sulphur and/or free sulphur compared with particles obtainable by merely oxidizing an aqueous composition of the starting dye (I).

The reducing medium is an aqueous alkaline medium containing a non-sulphide reducing agent which is capable of reducing a sulphur dye, such as sodium borohydride, α-hydroxyacetone, thiourea dioxide or, more preferably, a reducing sugar. By "non-sulphide reducing agent" is meant a reducing agent which is not a sulphide.

The alkali used to produce the aqueous alkaline medium is usually an alkali metal hydroxide, carbonate or phosphate (e.g. tetrasodium pyrophosphate, trisodium phosphate or disodium phosphate) or sodium metabisulphite, preferably potassium hydroxide or sodium hydroxide, especially the latter.

As the reducing sugar, there may be used any of those carbohydrates or combinations thereof which reduce Fehling solution, e.g. aldopentoses, such as L-arabinose, D-ribose and D-xylose; hexoses, such as D-glucose, D-fructose, D-mannose and D-galactose; and disaccharides, such as cellobiose, lactose and maltose. Products such as corn syrup, invert sugar and molasses, which contain reducing sugar, may also be used, as may dextrose prepared in situ from sucrose. The preferred reducing sugar is D-glucose.

As is well recognized in the art, sulphur dyes may differ considerably one from another and are described in the literature, e.g. the Colour Index, in terms of the method whereby they are produced rather than by their exact chemical structure. Even the thionation reaction product for a particular dye may differ somewhat from lot to lot. Accordingly, it is recommended to test a sample of the thionation product first. For a dye (I) which has not previously been treated according to this invention it is recommended to carry out a trial reduction by treating a sample of the starting dye (I) (i.e. in particular the thionation reaction product) with aqueous reducing medium to a clear solution of a dye (II) having a certain RE value and further process the solution to a dye paste (V) in the manner disclosed hereinafter. The resulting paste (V) is then evaluated with respect to its viscosity, particle size and salt-affected dyeing properties. If all of these properties are found to be satisfactory, the remainder of the starting dye (I) can be processed in the same manner. If any such property is not satisfactory, then one or more additional trials can be carried out with adjustments in one or more of the conditions of the reduction, oxidation and/or filtration stages, e.g. amounts and types of reactants, temperatures, pH's and times (including any milling step which may be found necessary to supplement the reduction-oxidation to obtain a particular desired particle size), so as to achieve, for example, a different RE for the reduction product (II) and/or a different degree of oxidation for (III), so that the final product has all of the desired properties. For a same dye (I) as a dye (I) that has been employed previously in a defined performance of the process of the invention, but which is from a different lot, a trial to check the matching of the resulting product can be carried out using the same conditions which were successful with the previous treatment. If the trial product is unacceptable with respect to one or more properties, then the trial can be repeated with appropriate adjustments as discussed above. Before a trial is carried out it may be advantageous to compare the bound excess sulphur and free sulphur content of the dye (I) with that of dye (II) produced therefrom and make appropriate initial adjustments, if necessary, in the reduction and/or oxidation conditions.

The process of this invention is preferably carried out so as to produce a dye slurry (IV) which, after being filtered and, if necessary, milled, will yield dye particles which, when mixed with a suitable dispersant and optionally water, will form a stable aqueous dispersion (in particular paste) (V) of sufficient concentration to impart industrially acceptable colour strength [i.e. at least matching the colour strength of a commercially acceptable, preferably presently marketed, corresponding (pre)reduced liquid composition of the respective dye] having at least one of the following improved properties:

A. At least 50 %, preferably at least 90 %, more preferably at least 99 %, of the sulphur dye particles of a size smaller than 10 $\mu$m, preferably smaller than 4.0 $\mu$m, more preferably smaller than 3.0 $\mu$m, as measured by a "Malvern Mastersizer" Model MS 1002 particle size analyzer.

B. A time of 60 seconds or less in the Dan River Filter Test.

C. A rotational viscosity no higher than 500 cP, preferably no higher than 200 cP, when measured at 22°C using a Brookfield Digital Viscometer, Model LV, a No. 2 spindle, a setting of 1.5 revolutions per minute and a factor 10.

The Dan River Filter Test is carried out as follows:

Two and one half grams of the dye paste (V) are stirred in 250 ml deionized water for 60 seconds using a magnetic stirrer and then heated with agitation to 71°C. A #2 Whatman filter paper (which has a retention of 8 $\mu$m) (11 cm) is placed smooth side up on top of a #4 Whatman filter paper (which has a retention of 20 to 25 $\mu$m) (11 cm), also smooth side up, in an 11 cm Buchner funnel equipped with a vacuum pump with trap and vacuum flask. The vacuum pump is turned on to establish a vacuum of 20 inches of mercury (corresponding to 677.3 mbar) to 25 inches of mercury (corresponding to 846.6 mbar) and the heated aqueous dye mixture is poured into the funnel. The time is measured from when the pouring is started to when the filter paper is first seen again.

More preferably, the paste (V) will have all three of the above properties A, B and C. Such a paste of C.I. Sulphur Black 1 having a solids content of 20 to 30 %, when used in an amount of 20 oz/gal (corresponding to 149.8 g/l) gives a dyeing at least equal to the 3/1 standard depth dyeing obtained with the same amount of the commercial prereduced liquid composition of the respective dye.

The steps of treating the starting dye (I), in particular the thionation reaction product, with the reducing medium and oxidizing the resulting solution of (II) can be carried out so as to produce an aqueous slurry (IV) in which the particles are of such size, e.g. 0.1 to 50 $\mu$m, and softness that they can be processed into an aqueous dispersion (V) which will pass the Dan River Filter Test with less milling than would be required to produce such a dispersion from particles of the starting dye (I) or from particles produced by merely oxidizing an aqueous composition, e.g. thionation product, comprising the starting dye (I). Said steps can be carried out so that at least 95 %, even at least 99 %, of the precipitated dye particles are larger than 0.3 $\mu$m and 100 % are larger than 0.1 $\mu$m. While size-reduction of oversized particles can be achieved during microfiltration or by milling, the reduction and oxidation steps can be carried out so that at least 50 %, even at least 75 %, or at least 85 % of the dye particles (III) are smaller than 10 $\mu$m, as they precipitate, and so that at least 95 % of the particles (III) are smaller than 30 $\mu$m. However, it is also within the scope of this invention to carry out the reduction and oxidation so that larger particles (III), e.g. mainly in the range of 10 to 50 $\mu$m, are obtained followed by more extensive milling.

With particular regard to the first step, whereby any solid dye (I) is dissolved by reduction to (II) and, when too much bound excess sulphur and/or free sulphur is present, the RE of the reaction mixture is increased as a result of the reducing action of the aqueous alkali/reducing agent, the amounts of alkali and reducing agent and the duration and temperature of the reaction should be such as to assure the desired results.

When the starting dye (I) is at least partially in water-insoluble solid form, like crude C.I. Sulphur Black 1, the amounts of alkali and reducing agent, preferably reducing sugar, and the reaction time and temperature should be sufficient to completely react (I) to a dissolved dye (II). In particular, they should be sufficient to form a clear solution as indicated by the following spot test: A sample of the reaction mixture is cooled to about 40°C and spotted on P8 Creped Filter Paper (Catalog No. 09-790-12 Allied Fischer Scientific). A clear solution is indicated by a rapid (less than 5 seconds) spreading of the solution on the paper without any solid dye residue, preferably without any solid residue of any type, in the middle of the spot.

When the starting dye (I) contains an undesirably high amount of bound excess sulphur and/or free sulphur, i.e. such an amount as would cause the dye paste (V) prepared therefrom as discussed above to be too thick (i.e. viscosity above 500 cP), the amounts of alkali and nonsulphide reducing agent, preferably reducing sugar, and the reaction time and temperature should be sufficient to reduce at least part of said bound excess sulphur and/or free sulphur and thereby cause an increase in the RE of the reaction mixture over the RE of the starting dye product of the thionation reaction. Preferably, they should be sufficient to reduce enough free sulphur and/or bound excess sulphur to leave a dye (III) which can be processed into an easily pourable dye paste (V). More preferably, the conditions of the reduction are such as to effect reduction of all of the free sulphur. With some dyes which in their (pre)reduced form (II) are highly soluble in water, for example dyes containing in the (pre)reduced form a high number of solubility-enhancing thiolate groups, particularly C.I. Sulphur Black 1, it is preferred that the reduction conditions be such as to also reduce all of the bound excess sulphur. This is suitably done by carrying out the reduction under conditions whereby the RE is caused to increase until it will increase no more. On the other hand, with some dyes, particularly those of lower solubility in water, such as C.I. Sulphur Blue 13, which contains only two thiol groups per molecule, the retention of some bound excess sulphur may be desirable when an aqueous dispersion (paste) (V) of such a dye is to be used in conjunction with a reducing sugar in a dyeing process. The retained sulphur is available to be converted to sulphides by the reducing sugar in the dyeing process so as to achieve a satisfactory reduction potential to assure even penetration of the dye into the fabric. (Of course, even with dyes of this latter type one can remove all of the bound sulphur when the final dye product is intended for use with added sodium sulphide as reducing agent.) The skilled artisan can determine for each dye how much free sulphur and/or bound excess sulphur is desirable for the proper balance of pourability and even dyeing and adjust the reaction parameters so as to lower the content of such sulphur and correspondingly increase the RE to the appropriate levels.

In general, the amount of alkali should be sufficient to give the aqueous mixture of dye (I), alkali and non-sulphide reducing agent an initial pH of at least 11, preferably at least 12, more preferably at least 13. During reduction with a reducing sugar the pH may decrease somewhat due to the conversion of the reducing sugar to carboxylic acids. Preferably, sufficient alkali is employed so that during the reduction step the pH of the mixture does not decrease by more than two units, more preferably not more than one unit, from its initial value before the desired dissolution of the dye (II) and/or increase in RE has taken place. At the very least, the amount of alkali should be sufficient to maintain the pH above 10 throughout the reduction. When the alkali is sodium hydroxide, the amount used is typically in the range 1 to 60, more typically 5 to 30, parts by weight per 100 parts, based on the dry weight, of the starting dye (I) in particular of the starting thionation reaction product. With C.I. Sulphur Black 1 good results are obtained using 5 to 15 parts by weight of sodium hydroxide per 100 parts by weight of the whole crude thionation reaction product. Amounts nearer the higher ends of these ranges favour the production of particles of the smaller sizes indicated above.

The amount of reducing agent will vary depending on the reducing power of the particular reducing agent employed and the characteristics of the particular dye (I) being treated. However, it will be within the skill of the art to make that determination, as by carrying out one or more trials as discussed above. Preferably the amount of reducing sugar will be at least 3, more preferably at least 7 parts by weight, per 100 parts, based on dry weight, of the starting dye (I) in particular thionation reaction product. With C.I. Sulphur Black 1 good results are obtained using at least 4, preferably 5 to 10 parts by weight of glucose per 100 parts by weight of the whole crude thionation reaction product. Amounts nearer the higher ends of these ranges favour the production of particles of the smaller sizes indicated above.

Preferably, no sulphide other than what may already be present in the starting dye (I) is introduced into the reduction reaction mixture. More preferably, a reducing sugar or mixture thereof is the only reducing agent added.

The amount of water is not critical. With dyes (I), such as C.I. Sulphur Black 1, whose crude thionation reaction products comprise an aqueous mixture, it may not be necessary to add any additional water. On the other hand, where the thionation reaction product (I) is obtained in the form of a melt or a solid with little or no water, sufficient water should be added so that all of the corresponding dye (II) can become dissolved therein to form a clear solution during the reduction step. Preferably the amount of water is such that following the oxidation steps the solids content of the resulting slurry is in the range 4 to 30 %, by weight.

The aqueous mixture of dye (I), alkali and reducing agent is preferably heated to a temperature of at least 50°C, preferably at least 80°C. Preferably the maximum temperature is about 107°C, especially 99°C. The duration of the heating step should be sufficient to react any solid dye (I) and dissolve the reaction product (II) and, if there is too much bound excess sulphur and/or free sulphur present, to raise the RE of the reaction mixture over that of the starting thionation product, preferably by at least 5 units, more preferably by at least 8 units.

Where the starting dye (I) is C.I. Sulphur Black 1, in particular the crude product of the thionation reaction whereby this dye is produced, the reaction parameters should be such as to completely react it and dissolve the corresponding dye (II) to a clear solution and especially such as to completely reduce the bound excess sulphur and free sulphur which characterizes this dye as produced. Preferably, this reduction is effected at a pH maintained in the range 10.5 to 13.8 with an amount of reducing sugar, advantageously glucose, of at least 4 parts, preferably 5 to 10 parts, more preferably 7 to 7.5 parts, per 100 parts of the starting dye product at a temperature in the range 60 to 105°C, more preferably 75 to 99°C, most preferably 90 to 99°C for a sufficient time to raise the RE from an initial value of about 0 to 10 to a final value of about 5 to 35, more preferably from an initial value of 0 to 3 to a final value of 10 to 25.

The reduction step of this process also has the effect of reducing oligosulphide groups, in particular disulphide groups, which are present as links between pairs of chromophoric groups in sulphur dye molecules produced by a thionation process. A mixture of reducing sugar and alkali above 80°C provides a strong reducing medium wherein the bound excess sulphur and/or free sulphur is reduced to sulphides and the reducing sugar is oxidized. At the same time oligosulphide, in particular disulphide links, between chromophoric groups are also reduced to sodium thiolate moieties and this reaction does not contribute to any significant increase in the RE of the reaction mixture. However, where the reduction step is carried out to achieve a maximum RE, indicating substantially complete elimination of bound excess sulphur and free sulphur, as in the case of C.I. Sulphur Black 1, all of the oligo-, particularly disulphide linkages should have been eliminated by the time that stage of the reaction is reached, so that the resulting solution is one in which the reduced dye (II) is completely in the form of molecules containing a single chromophoric group, i.e. in monochromophoric or hyperleuco form. Such solutions constitute a further aspect of the invention. They are particularly suitable for further treatment according to the process of this invention to form dispersions (V) in which the dispersed dye (III) [or (III') defined below] particles are of the preferred size.

In the second stage of the process of this invention the solution obtained according to the first stage, as described above, is oxidized to effect precipitation of the dye (III), preferably at least 95 % of the dye, most preferably complete precipitation. A convenient test for determining whether a sufficient proportion of the dye (II) has been oxidized and precipitated as (III) is to spot a representative sample of the resulting slurry (IV) on P8 Crepe filter paper at 40°C. The greater the proportion of dye which has precipitated, the more dye solids will be in the center of the spot and the less colored will be the run out (spread) of the spot. With the preferred degree of oxidation only the center of the spot will contain solids and the surrounding run out will be water clear.

Oxidation is preferably carried out using an oxidizing agent, e.g. by oxygenating with oxygen or a suitable source of oxygen, such as hydrogen peroxide or, most preferably, air.

The rate of oxidation is not critical. For example, it is enough to introduce air at a rate such as to cause a satisfactory bubbling rate (i.e. such a rate as to give an acceptable oxidation rate substantially without foaming) through the aqueous dye (II) composition resulting from the reduction step (1).

During oxidation sulphides present in the dye (II) solution are oxidized, resulting in a lowering of the sulphide content and an accompanying decrease in the reduction equivalent (RE). Preferably, the oxidation is carried out so as to lower the sulphide content to an extent that the RE of the resulting slurry (IV) is no higher than 2. More preferably, it is carried out so as to completely oxidize the sulphides and render the resulting slurry (IV) sulphide-free as indicated by an RE of zero. Another method of determining whether the oxidized slurry (IV) is sufficiently free of sulphides is to adjust the pH of a sample of the slurry at 25°C to 1 with 36 % hydrochloric acid and test the space no more than two inches (= 50.8 mm) directly above the slurry, while stirring, with wet lead acetate paper. There should be no change in the colour of the paper.

Oxidation (preferably aeration) may be carried out at a temperature in the range 10 to 100°C, preferably 25 to 85°C, more preferably 30 to 50°C, most preferably 37°C to 43°C. Temperatures nearer the lower ends of these ranges favour the production of smaller particles. With C.I. Sulphur Black 1 especially good results are achieved at a temperature of about 40°C. However, at an oxidation temperature of 80°C C.I. Sulfur Black 1 slurries can be obtained containing particles of median sizes in the range of about 7 to 18 $\mu$m which are of sufficient uniformity to be suited for further treatment by conventional filtration and sufficiently softer than the particles of the starting crude dye (I) as to be more easily milled to a smaller particle size.

Oxidation is suitably carried out at a pH of 7 to 13, preferably 8 to 11, more preferably 9.5 to 10.5. With C.I. Sulphur Black 1 especially good results are obtained at pH 9.7 to 9.8, when particles smaller than 4 $\mu$m are desired, and at pH 8.3 to 8.5, when particles in the range of about 7 to 18 $\mu$m are desired. In order to prevent the pH from exceeding the upper limit of the selected range, an acid may be added during part of the oxidation procedure, particularly during the early stages. The acid may be organic or inorganic, such as acetic, sulphuric or phosphoric acid. Preferably, the pH is monitored continuously with a pH meter and the appropriate amount of acid is added to correct any deviation from the predetermined pH range. The acid should be added at such a rate and in such a way as to minimize or avoid an undesired local development of $H_2S$ or $SO_2$. The addition of acid is discontinued when such addition is no longer necessary to keep the pH from rising.

In general, oxidation is carried out under a combination of the conditions discussed above for a sufficient time that a dye slurry (IV) of decreased sulphide content is produced, preferably a slurry (IV) in which all of the sulphides have been oxidized, more preferably a sulphide-free slurry in which all of the dye has been precipitated.

More particularly, the oxidation is carried out in such a manner that the product of this step taken with the preceding reduction step and a subsequent filtration and a possible milling or other mechanical particle size reduction treatment will, when combined with one or more appropriate dispersing agents, form a dye dispersion (V) having at least one of the properties A, B and C described above.

As discussed above, it may be advantageous to submit a sample of the starting dye (I) to a trial treatment to form a dispersion (V) and then make whatever adjustments may be needed in the reduction, oxidation and/or filtration steps as disclosed herein to optimize the properties of the product. Overoxidation (as well as bound and/or free sulphur) may cause the final dispersion (V) to be too thick, due to conversion of some precipitated dye (III) to a more water-soluble form, as recognizable by an increase in the amount of colour in the run-out according to the last mentioned spot test. Therefore, in addition to or instead of adjusting the conditions of the reduction to decrease the amount of bound excess sulphur and/or free sulphur, it may be necessary to adjust the conditions of the oxidation, e.g. to lower the temperature and/or pH or shorten the time of oxidation. Overoxidation may also result in dye (III) particles which are too large and therefore have too great a tendency to settle out from an aqueous dispersion (V). This may be overcome by adjusting one or more of the oxidation conditions and/or by subjecting the particles (III) to milling and/or other particle size-reducing mechanical action.

The oxidation, preferably oxygenation, is preferably carried out until no further addition of acid is necessary to keep the pH from rising during oxidation. The exact point at which the oxidation is stopped is not critical. Preferably, it is stopped before the pH drops by more than 1.5 units below the value at which the addition of acid is discontinued. More preferably, it is stopped before there is any decrease in the pH from the value at which the addition of acid is discontinued. The duration of the oxidation will vary depending on the other parameters, e.g. temperature, pH and the rate at which oxygen is introduced. Typical oxidation times are 0.5 to 5 preferably 0.5 to 3 hours beyond the point at which the addition of acid is discontinued. For C.I. Sulphur Black 1 the total oxygenation time is usually about 8 to 14, preferably about 8.5 to 10 hours. Using the particle size as a guide, the oxygenation is preferably carried out so that 100 % of the dye particles are larger than 0.1 $\mu$m and at least 95 %, more preferably at least 99 %, are larger than 0.3 $\mu$m and so that at least 50 %, more preferably at least 75 %, most preferably at least 85 % of the dye particles are smaller than 10 $\mu$m.

Aqueous slurries (IV) of sulphur dyes (III) obtainable by the process described above constitute a further aspect of the invention.

Such slurries (IV) are characterized by a very low content, preferably a zero content, of inorganic sulphides. Slurries (IV) of such low sulphide content have an RE no higher than 2, preferably an RE of zero. Slurries (IV) of suitably low inorganic sulphide content are also indicated by the lead acetate test described above.

Preferably, such slurries (IV) are further characterized by being useful for the batch dyeing of cellulosic textile materials. Suitable dyeing methods are well known in the art and are described in the literature, e.g. at page 3649 of the Colour Index, third edition, volume 3. Particularly suitable are such slurries (IV) whose particle sizes are as specified above with respect to the product (III) of the oxidation step.

A further preferred characteristic of the slurries (IV) of this invention is that the sulphur dye (III) particles are softer than particles of the corresponding sulphur dye produced from the same dye (I) but not by the above-described process. This is evidenced by the fact that dye particles (III) in a slurry (IV) produced according to this invention, e.g. C.I. Sulphur Black 1, undergo particle size reduction as a result of treatment with ultrasound, e.g. five minutes continuous treatment using the Malvern Mastersizer particle size analyzer, whereas the harder particles of the respective starting dye (I) or of the corresponding sulphur dye in a slurry produced by a different method undergo no particle size reduction when submitted to the identical ultrasound treatment.

Another preferred characteristic of the slurries (IV) is the narrow and uniform particle size distribution as described above, slurries (IV) in which at least 85 X of the particles are in the range 0.3 to 3 $\mu$m being especially preferred, such slurries being particularly well suited for further treatment by filtration, including microfiltration.

Of special interest are the black sulphur dyes, in particular C.I. Sulphur Black 2 and most especially C.I. Sulphur Black 1, which, after being reduced and oxidized as described above, are, by virtue of the decreased amount of accompanying sulphur (free sulphur and/or bound excess sulphur) significantly improved insofar as having a decreased tendering effect on cellulosic materials, such as cotton. More particularly, cotton textile material dyed with such a dye shows less deterioration when tested according to AATCC Test Method 26-1983 than does otherwise identical cotton textile material identically dyed with the same black sulphur dye, particularly a sulphur dye produced in the same thionation reaction, but which has not been treated according to the process of the present invention to lower its content of free sulphur and/or bound excess sulphur. Sulphur dyes (III) from which all of the free sulphur and bound excess sulphur has been removed give the greatest improvement with respect to decreased tendering.

The slurries (IV) produced as described above may be filtered and washed to separate the sulphur dye particles (III) from salts which are present in the slurry, e.g. inorganic sulphates, sulphites and/or thiosulphates. The reduction in salt content is conveniently indicated by a lowering of the conductivity of the aqueous phase of the slurry. Preferably, the washing is effected until the used wash water has a conductivity of less than 2000 $\mu$mho/cm, more preferably less than 400 $\mu$mho/cm, most preferably less than 200 $\mu$mho/cm. Preferably the water to be employed for washing has a conductivity of 50 to 160 $\mu$mho/cm, more preferably 70 to 120 $\mu$mho/cm.

The filtration may be carried out using conventional filtration and washing techniques, preferably after adjusting the pH of the slurry (IV) to 3 to 9, more preferably 4 to 6, as by the addition of a suitable acid, such as acetic or sulphuric acid. On a laboratory scale a suitable filter paper is Fisher Qualitative Filter Paper P8 Crepe, porosity course, flow rate fast, catalogue number 09-790-12G. A membrane of comparable porosity may be used when operating on a larger scale. The washing of the filtration residue may be carried out as described in U.S. Patent 4,917,706, the disclosure of which, and particularly the portion at column 2, line 67 to column 3, line 39, is incorporated herein by reference.

The slurries (IV) produced by the reduction and oxidation steps (1) and (2) above, being preferably characterized by minimum particle sizes greater than 0.1 μm, are well suited for separation by microfiltration, preferably as described in US Patent 4,992,078, the entire disclosure of which is incorporated herein by reference. In accordance with the preferred procedure as described therein, the pH of the slurry is adjusted to 3.5 to 8.5, more preferably 5 to 6, with a suitable acid, such as acetic or sulphuric acid, and the water content is adjusted to give a solids concentration of 10 to 35 % by weight. The microfiltration is suitably carried out at 20 to 35°C, more preferably 25 to 26°C, with fresh addition of water at a rate equal to the rate at which water is being removed as permeate. This is continued until the conductivity of the permeate has decreased to below 2000 μmho/cm, more preferably below 400 μmho/cm, at which point the addition of water is discontinued. The resulting slurry (IV') may, if desired, be further concentrated, preferably to a solids content of 15 to 30 % by weight, by further removal of water without replacement.

The filtered and washed dye particles (III') produced as described above constitute a further aspect of the present invention, such particles being characterized by a very low content or complete absence of inorganic sulphides and other salts and/or decreased hardness and/or a decreased content of bound excess sulphur and/or free sulphur. Sulphur dyes (III') which have been obtained in this manner have the additional advantage over the product (III) of just the reduction and oxidation steps of being able to produce dyeings of greater tinctorial strength.

The sulphur dye particles (III), preferably after being filtered and washed to particles (III'), may be reduced back to the reduced sulphur dye form with aqueous caustic alkali, containing a suitable reducing agent, such as an alkali metal sulphide, or preferably a non-sulphide reducing agent, such as those mentioned above, e.g. glucose, e.g. as described in US Patent 4,917,706, to produce a liquid composition of a (pre)reduced sulphur dye (II'). These liquid compositions of (pre)reduced sulphur dye (II'), in particular solutions of dye (II'), more preferably solutions of monochromophoric reduced sulphur dye (II'), may if desired, be dried in a manner conventional per se, e.g. spray-dried. When drying in the presence of air to produce a dried product which is at least in part in oxidized form, i.e. in the form of dry (III') optionally in admixture with dried (II'), at least one surfactant (in particular a conventional wetting agent or/and dispersant, preferably as indicated below) is preferably added to the liquid composition to be dried, in order to facilitate dispersability of the dried product in water, for use.

Preferably, the filtered and washed dye particles (III') are further processed to form a dispersion (V) which is stable to normal storage for at least three months and preferably for a least six months. By "stable" is meant that it will not become too viscous to pour, more preferably not above 200 cP. Such further processing comprises adjusting - if necessary - the solids concentration of the presscake obtained from conventional filtration or of the slurry obtained by microfiltration to that which will give the desired dyeing strength, e.g. about 10 to 35 %, by weight, thoroughly mixing the resulting dye composition (IV') with an effective amount of dispersing agent or mixture thereof, in particular such as disclosed at column 3, lines 40 to 62 of the above-referenced US Patent 4,992,078, and - if necessary - mechanically reducing the size of the dye particles. Other additives, e.g. fungicides, hydrotropes or antifreeze agents, may also be included. A typical recipe for a dispersion (V) from presscake comprises 30 % dye (III') solids, 7 % diethylene glycol, 6 % sodium ligninsulphonate, 1 % Surfynol 104-E (mixture of ethylene glycol and 2,4,7,9-tetramethyl-5-decyne-4,7-diol), 0.3 % Giv-Gard DXN (6-acetoxy-2,4-dimethyl-1,3-dioxane) and the balance water. A typical recipe for a dispersion (V) from the microfiltered slurry (IV') comprises 200 parts slurry, 4.5 parts Surfynol 104-E, 13 parts Vanisperse CB (a sodium lignosulphonate that has been purified by fractionation), 1 part Giv-Gard DXN, 8 parts Tamol SN (sodium salt of alkylnaphthalene sulphonic acid/formaldehyde condensate) and sufficient water to give the desired tinctorial strength. The resulting mixture is then milled or subjected to another mechanical size reducing treatment, if necessary, to further reduce the particle size until the resulting dispersion (V) will pass the Dan River Filter Test described above. The aforestated percentages and parts are by weight.

Preferably, care is taken to prevent contamination of the sulphur dye by ferric ions during the various steps of the process. This may be achieved by carrying out any step wherein such contamination is otherwise likely to occur in the presence of a sequestering agent, such as ethylenediamine tetraacetic acid tetrasodium salt, in an amount effective to reduce and preferably to substantially eliminate such contamination.

The sulphur dye dispersions, in particular (V), produced as described above may be used to dye substrates dyeable with sulphur dyes, in particular cellulosic substrates, by methods known per se in the art for dyeing with sulphur dyes, in particular by reducing to the respective leuco form for application and oxidizing after application. They are especially suited for use in dyeing procedures employing reducing systems which are free from inorganic sulphides, particularly reducing systems based on reducing sugars such as glucose.

They can be used for dyeing cellulosic or cellulosic/polyester blends as well as other fibers, such as cellulose triacetate or emiacetate, acrylics and nylon.

They can be mixed with a suitable reducing agent, e.g. glucose, and sodium hydroxide and applied by padding the resulting mixture on the fabric, followed by steaming preferably at 100 to 104°C for 30 to 200 seconds and then washing. They can also be applied by conventional batch dyeing methods.

The invention will be illustrated by following examples in which parts and percentages are by weight and temperatures are in degrees Celsius, unless otherwise indicated. The RE, particle size and viscosity are measured as described above.

Example 1

The pH of 500.0 parts crude C.I. Sulphur Black 1 dye (pH 10.04, RE = 1.12) is adjusted to 11.0 with the addition of 5.6 parts sodium hydroxide 50 % solution. The crude dye is then mixed with 40.0 parts glucose and heated to 55°C, at which point an additional 106 parts sodium hydroxide 50 % solution is added. The resulting mixture is heated to 98°C with stirring, and held at that temperature for one hour, at which point the dye is in complete solution, as indicated by a solids-free spot in the above-described spot test, and the RE of the solution is 19.0.

The pH of the solution is reduced to 9.8 with the addition of 129.2 parts 25 % sulphuric acid and the solution is then cooled to 40°C and aerated for 13.5 hours at that temperature while the pH of the solution is maintained in the range of 9.75 to 9.80 with the continuous addition of 36.2 parts sulphuric acid 25 % solution.

The resulting slurry of the precipitated dye is cooled to 20°C, and 48 parts sulphuric acid 25 % solution are added to reduce the pH to 5. Fifty percent of the particles are smaller than 1.96 μm measured by the Malvern Particle Size Analyzer. The dye slurry is filtered using Fisher P8 crepe filter paper described above and the presscake is washed with tap water until the conductivity of the used washing liquid is less than 200 μmho/cm.

Two hundred parts of the washed presscake having a dry content of 25.68 % is mixed with 18.7 parts diethylene glycol, 14.1 parts Vanisperse CB, 0.7 part GivGard DXN and 2.4 parts Surfynol 104E and rolled in a ball mill for 26 hours. The resulting dispersion has a time of less than 30 seconds in the Dan River Filter Test and a viscosity of 123 cP. Fifty percent of the particles are smaller than 0.6 μm.

This product may be used to dye cotton in the manner disclosed in Application Example A or B of U.S. Patent 4,992,078.

Example 2

500 parts crude C.I Sulphur Black 1 dye are mixed with 35.63 parts dextrose. The resulting mixture is heated to 50°C and 96.02 parts sodium hydroxide 50 % solution are added, after which the resulting mixture is heated to 97°C and held at that temperature for one hour, whereby a solution is produced having a pH of 10.96 and an RE of 11.12.

The solution is cooled to 40°C and the pH is adjusted to 9.8 with 87.03 parts 25 % sulphuric acid. It is then aerated for 9.25 hours with 43.45 parts 25 % sulphuric acid being added as necessary to maintain the pH at 9.8. The resulting slurry is cooled to 25°C. In the resulting slurry 90 % of the dye particles are smaller than 3.4 μm, 50 % are smaller than 1.61 μm and 99 % are at least 0.4 μm.

The pH of the slurry is adjusted to 5.0 with 59.32 parts sulphuric acid 25 % and stirred for 1 hour. It is then filtered by conventional filtration and washed with water until the conductivity of the used wash water is below 200 μmho/cm.

The resulting presscake is milled with dispersing agents to produce a paste having a viscosity of 15 cP.

This product is used to dye cotton by each of the methods disclosed in Application Examples A and B of US Patent 4,992,078.

Example 3

Two hundred parts of crude thionation mass of C.I. Sulphur Black 1 (Const. No. 53185) prepared by the usual thionation technique, 10.0 parts glucose, and 21.8 parts sodium hydroxide 50 % solution are heated to 90°C, and the mixture is held at that temperature for 0.5 hour. The reduction equivalent of the resulting clear solution is 15.4 increased from the value of 1.54 for the crude black dye. The solution is cooled to 80°C, and the pH is reduced to 9.1 by the addition of 3.3 parts acetic acid 91.3 % solution. Then the solution is aerated for 9 hours and 20 minutes until the dye is completely out of solution. The pH of the resulting slurry is then reduced to 5.0 with the addition of 9.37 parts acetic acid 91.3 %, and it is held at that pH for one hour. The slurry is filtered, and the filter cake is washed with water until the conductivity of the used washing liquid is less than 200 μmho/cm. The filtration and the wash have a good steady speed, and the filtrate and the washing liquid do not contain any dye at all. Fifty percent of the particles of the slurry are smaller than 5.58 μm. Under a conventional microscope a highly even distribution of uniform particles can be observed.

Example 4

Two hundred fifty parts of crude C.I. Vat Blue 43 (Const. No. 53630) is diluted with 250 parts water and mixed with 35.0 parts glucose and 100 parts sodium hydroxide 50 % solution. The resulting mixture is heated to 90°C and held at that temperature for 0.5 hour, whereby a clear solution is produced.

The solution is cooled to 80°C and the pH is adjusted to 9.0 by the addition of 81.0 parts sulphuric acid 25 % solution. The solution is then aerated for 6 hours and 20 minutes until the dye is completely out of solution. During the aeration 23.44 parts sulphuric acid 25 % solution are added as required to maintain the pH at 9.0.

The resulting slurry is adjusted to pH 5 with 13.9 parts sulphuric acid 25 % solution. Fifty percent of the particles in this slurry are smaller than 1.05 µm.

Examples 5 to 10

Examples 1 and 2 are repeated, except that instead of conventional filtration and washing, the slurry produced in the oxidation step, after being acidified to pH 5, is microfiltered and concentrated as disclosed in Examples 1, 2 and 3 of US Patent 4,992,078.

Example 11

To 1000 parts crude C.I. Sulphur Black 1 thionation product are added 10.4 parts 50 % aqueous NaOH to adjust the pH to 11.0. To this are added 72 parts of dextrose at 60°C and 220 parts of 50 % aqueous NaOH at 80°C. The resulting mixture is held at 80°C for 1 hour, whereby a solution is obtained having a pH of 11.85 and an RE of 8.01.

The solution is cooled to 75°C and its pH is adjusted to 8.5 with 369.0 parts of 25 % sulphuric acid. The resulting mixture is aerated for 9 hours at 80°C while adding 25 % $H_2SO_4$ as necessary to maintain the pH at 8.5. A slurry of oxidized sulfur dye is obtained in which 90.3 % of the particles are at least 8.8 µm and 89.3 % are under 22.2 µm.

The slurry is cooled to below 18°C, adjusted to pH 5.0 with 65.4 parts 25 % $H_2SO_4$, stirred for one hour and filtered using Fisher P-8 crepe filter paper. The filter cake is washed with water having an initial conductivity of about 150 µmho/cm for 40 minutes until the conductivity of the used wash water is 210 µmho/cm.

To 480.0 parts of the washed filter cake are added 30.2 parts Vanisperse CB, 1.8 parts Giv-Gard DXN, 10.9 parts Surfynol 104-E and 81.9 parts water. The resulting mixture is milled overnight with 10 mm glass marbles and then with 605 parts of 5-7 mm glass beads to a total milling time of 60.5 hours. The thus-obtained dye paste has a viscosity of 52 cP; the particle size of the dye is < 4µm.

**Claims**

1. A process for producing a dye slurry which comprises the steps of

(1) treating a starting sulphur dye (I), that contains an aromatically bound oligosulphide bridge reducible to thiol groups and may contain bound excess sulphur and/or free sulphur, in an amount of a non-sulphide reducing agent-containing aqueous reducing medium which is effective to reduce it and produce a solution of the reduced sulphur dye (II), which can be oxidized to form an aqueous slurry (IV) of precipitated solid particles of the oxidized sulphur dye (III) which are more uniform in size and/or softer and/or of smaller average particle size than and/or which contain less bound excess sulphur and/or free sulphur than (I) or than particles obtainable by oxidizing an aqueous composition of the starting dye (I),

and (2) oxidizing the solution obtained in step (1) to produce said slurry (IV) of precipitated solid particles of the oxidized sulphur dye (III).

2. A process according to claim 1 wherein the starting sulphur dye (I) contains solid dye particles and step (1) comprises dissolving all of said particles.

3. A process according to claim 1 wherein the starting sulphur dye (I) contains bound excess sulphur and/ or free sulphur and step (1) comprises reducing at least part of said bound excess sulphur and/or free sulphur.

4. A process according to claim 3 wherein step (1) comprises reducing all of the bound excess sulphur and/or free sulphur.

5. A process according to claim 1 wherein the starting sulphur dye (I) comprises molecules containing at least one pair of chromophoric groups linked together by an oligosulphide group and step (1) is carried out for a sufficient time to break said oligosulphide groups and produce a solution in which all of the dye (II) molecules contain a single chromophoric group.

6. A process according to claim 1 wherein the starting sulphur dye (I) is a crude product as obtained from a thionation reaction.

7. A process according to claim 1 wherein the starting dye (I) is C.I. Sulphur Black 1.

8. A process according to claim 1 wherein the reducing medium is an aqueous alkaline medium comprising a non-sulphide reducing agent.

9. A process according to claim 8 wherein no sulphide other than what may already be present in the starting dye (I) is added to the reducing medium.

10. A process according to claim 8 wherein the reducing agent is sodium borohydride, $\alpha$-hydroxyacetone, thiourea dioxide or a reducing sugar.

11. A process according to claim 10 wherein the reducing agent is a reducing sugar.

12. A process according to claim 1 which is carried out in the presence of an effective amount of metal sequestering agent to decrease the amount of any ferric ions which may otherwise contaminate the process.

13. A process according to claim 1 wherein step (1) is carried out until the reduction equivalent of the reaction mixture is higher than that of the starting thionation product (I).

14. A process according to claim 13 wherein step (1) is carried out until the reduction equivalent of the reaction mixture is at least 5 units higher than that of the starting thionation product (I).

15. A process according to anyone of claims 1 to 14, wherein in step (1) the degree of reduction of (II) is within the scope ranging up to the monochromophoric stage.

16. A process according to claim 1 wherein step (2) is carried out in the presence of an effective amount of an oxidizing agent.

17. A process according to claim 16 wherein the oxidizing agent is oxygen or a source of oxygen.

18. A process according to claim 16 wherein step (2) is carried out for a sufficient time to lower the reduction equivalent of the oxidation reaction mixture to 2 or less.

19. A process according to claim 16 wherein step (2) is carried out until the oxidation reaction mixture is free of sulphides.

20. A process according to claim 16 wherein step (2) is carried out until the sulphur dye (III) is completely precipitated.

21. A process according to claim 1 for producing an aqueous sulphur dye slurry (IV) of C.I. Sulphur Black 1 which comprises the steps of

    (1) heating crude C.I. Sulphur Black 1 dye in an aqueous alkaline medium containing a reducing sugar for a sufficient time to dissolve all of the solid material in the crude dye and reduce bound excess sulphur and free sulphur contained therein

    and (2) oxidizing the resulting solution for a sufficient time to produce a slurry of precipitated solid particles of the dye.

22. A process according to any of claims 1 to 21, wherein the size of the particles (III) is in the range of 0.1 to 50 μm.

23. A process according to claim 22, wherein the size of at least 95 % of the particles (III) is > 0.3 μm and the size of at least 50 % of the particles (III) is < 10 μm.

24. A process according to any of claims 1 to 23, wherein the obtained slurry (IV) is subjected to washing and filtration of the particles (III) to give a slurry (IV') of particles (III').

25. A process for the production of an aqueous sulphur dye dispersion (V), wherein a slurry (IV) according to any of claims 1 to 23, optionally after filtering and washing according to claim 24, is processed to a dispersion (V).

26. A process according to claim 25, wherein (IV) or (IV'), is combined with one or more suitable dispersants and optionally further additives and optionally diluted with water and/or subjected to a mechanical size-reduction treatment.

27. A process according to claim 25 or 26, wherein the rotational viscosity of the produced dispersion (V) is ≤ 500 cP.

28. A process for the production of a liquid composition (II') of (pre)reduced sulphur dye, wherein particles (III') according to claim 24 are reduced in aqueous caustic alkali with a suitable reducing agent.

29. A process for the production of a dried sulphur dye composition, wherein a liquid composition (II') according to claim 28 is dried optionally in the presence of a dispersant and/or wetting agent.

30. A product produced by the process according to any of claims 1 to 29.

31. A solution of a reduced sulphur dye (II) produced according to process step (1) specified in claim 1, and which is in monochromophoric form.

32. A sulphur dye (III') produced by washing and filtering the product (III) or (IV) produced by the process of claim 1.

33. A low tendering sulphur dye (III) or (III') according to claim 30 or 32 selected from the group consisting of C.I. Sulphur Black 1 and C.I. Sulphur Black 2.

34. A low tendering sulphur dye (III') according to claim 33 which is C.I. Sulphur Black 1.

35. A black sulphur dye (III') according to any of claims 30 and 32 to 34, from which a sufficient amount of bound excess sulphur and/or free sulphur has been removed to decrease the tendering effect of the dye on cotton.

36. A sulphur dye dispersion (V) according to claim 30 obtained by processing a sulphur dye (III') according to claim 32 to a sulphur dye dispersion.

37. A dispersion (V) according to claim 30 or 36 in which the particle size of the dispersed particles is ≤ 4µm.

38. A liquid composition (II') produced according to claim 28 by reduction of sulphur dye (III') according to any of claims 32 to 35.

39. A dry sulphur dye composition according to claim 29, obtained by drying a liquid composition (II') according to claim 38 optionally in the presence of a dispersant and/or wetting agent.

40. A process for dyeing substrates dyeable with sulphur dyes, wherein the substrates are dyed with sulphur dyes which are employed in the form of dispersions (V) according to any of claims 30, 36 or 37, or of dry compositions according to claim 39 previously diluted with water for use, and wherein the sulphur dyes are reduced to the respective leuco form for application and then oxidized after application.

**Patentansprüche**

1. Ein Verfahren zur Herstellung einer Farbstoffaufschlämmung umfassend die Stufen

    (1) Behandlung eines Ausgangsschwefelfarbstoffes (I), welcher eine zu Thiolgruppen reduzierbare aromatisch gebundene Oligosulfidbrücke enthält und überschüssigen gebundenen Schwefel und/oder freien Schwefel enthalten kann, in einer solchen Menge eines sulfidfreies Reduktionsmittel enthaltenden wäßrigen Reduktionsmediums, die fähig ist, ihn zu reduzieren und eine Lösung des reduzierten Schwefelfarbstoffes (II) zu erzeugen, welche zur Bildung einer wäßrigen Aufschlämmung (IV) ausgefällter fester Teilchen des oxydierten Schwefelfarbstoffes (III) oxydiert werden kann, die einer einheitlicheren Größe und/oder weicher und/oder einer kleineren durchschnittlichen Teilchengröße als (I) sind und/oder die weniger gebundenen überschüssigen Schwefel und/oder freien Schwefel enthalten als (I) oder als Teilchen, die durch Oxydation einer wäßrigen Zubereitung von Ausgangsfarbstoffen (I) erhältlich sind,

    und (2) Oxydation der in Stufe (I) erhaltenen Lösung zur Herstellung der gennanten Aufschlämmung (IV) von ausgefällten festen Teilchen des oxydierten Schwefelfarbstoffes (III).

2. Ein Verfahren gemäß Anspruch 1, worin der Ausgangsschwefelfarbstoff (I) feste Farbstoffteilchen enthält und Stufe (1) die Lösung all dieser Teilchen umfaßt.

3. Ein Verfahren gemäß Anspruch 1, worin der Ausgangsschwefelfarbstoff (I) gebundenen überschüssigen Schwefel und/oder freien Schwefel enthält und Stufe (1) die Reduktion von mindestens einem Teil des genannten gebundenen überschüssigen Schwefels und/oder freien Schwefels umfaßt.

4. Ein Verfahren gemäß Anspruch 3, worin Stufe (1) die Reduktion vom gesamten gebundenen überschüssigen Schwefel und/oder freien Schwefel umfaßt.

5. Ein Verfahren gemäß Anspruch 1, worin der Ausgangsschwefelfarbstoff (I) Moleküle umfaßt, die mindestens ein Paar chromophorer Gruppen enthält, die durch eine Oligosulfidgruppe miteinander verbunden sind, und Stufe (1) für eine ausreichende Zeit durchgeführt wird, um die genannten Oligosulfidgruppen zu brechen und eine Lösung zu erzeugen, in welcher alle Farbstoff (II)-Moleküle eine einzelne chromophore Gruppe enthalten.

6. Ein Verfahren gemäß Anspruch 1, worin der Ausgangsschwefelfarbstoff (I) ein Rohprodukt ist, wie aus einer Thionierungsreaktion erhalten.

7. Ein Verfahren gemäß Anspruch 1, worin der Ausgangsfarbstoff (I) C.I. Sulphur Black 1 ist.

8. Ein Verfahren gemäß Anspruch 1, worin das Reduktionsmedium ein wäßriges alkalisches Medium ist, das ein sulfidfreies Reduktionsmittel enthält.

9. Ein Verfahren gemäß Anspruch 8, worin kein anderes Sulfid dem Reduktionsmedium zugegeben wird als dasjenige, welches bereits im Ausgangsfarbstoff (I) vorhanden sein kann.

10. Ein Verfahren gemäß Anspruch 8, worin das Reduktionsmittel Natriumborohydrid, α-Hydroxyaceton, Thioharnstoffdioxyd oder ein reduzierender Zucker ist.

11. Ein Verfahren gemäß Anspruch 10, worin das Reduktionsmittel ein reduzierender Zucker ist.

12. Ein Verfahren gemäß Anspruch 1, welches in Gegenwart einer wirksamen Menge eines metallsequestrierenden Mittels durchgeführt wird, um die Menge an jeglichen Eisen-III-ionen herabzusetzen, welche sonst das Verfahren kontaminieren können.

13. Ein Verfahren gemäß Anspruch 1, worin die Stufe 1 solange durchgeführt wird, bis das Reduktionsäquivalent des Reaktionsgemisches höher als dasjenige des Ausgangsthionierungsproduktes (I) ist.

14. Ein Verfahren gemäß Anspruch 13, worin Stufe 1 solange durchgeführt wird, bis das Reduktionsäquivalent des Reaktionsgemisches um mindestens 5 Einheiten höher ist als dasjenige des Ausgangsthionierungsproduktes (I).

15. Ein Verfahren gemäß irgendeinem der Ansprüche 1 bis 14, worin in Stufe (1) der Reduktionsgrad von (II) innerhalb des Bereiches bis zur monochromophoren Stufe liegt.

16. Ein Verfahren gemäß Anspruch 1, worin Stufe (2) in Gegenwart einer wirksamen Menge eines Oxydationsmittels durchgeführt wird.

17. Ein Verfahren gemäß Anspruch 16, worin das Oxydationsmittel Sauerstoff oder eine Sauerstoffquelle ist.

18. Ein Verfahren gemäß Anspruch 16, worin Stufe 2 für eine solche Dauer durchgeführt wird, die ausreicht, um das Reduktionsäquivalent des Oxydationsreaktionsgemisches auf 2 oder weniger herabzusetzen.

19. Ein Verfahren gemäß Anspruch 16, worin Stufe 2 solange durchgeführt wird, bis das Oxydationsreaktionsgemisch frei von Sulfiden ist.

20. Ein Verfahren gemäß Anspruch 16, worin Stufe 2 solange durchgeführt wird, bis der Schwefelfarbstoff (III) vollständig ausgefällt ist.

21. Ein Verfahren gemäß Anspruch 1 zur Herstellung einer wäßrigen Schwefelfarbstoffaufschlämmung (IV) von C.I. Sulphur Black 1, umfassend die Stufen

    (1) Erhitzen des rohen C.I. Sulphur Black 1 Farbstoffes in einem wäßrigen, alkalischen, einen reduzierenden Zucker enthaltenden Medium für eine Zeit, die ausreichend ist, um das gesamte feste Material im rohen Farbstoff zu lösen und darin enthaltenen gebundenen überschüssigen Schwefel und freien Schwefel zu reduzieren

    und (2) Oxydieren der resultierenden Lösung für eine genügende Zeit, um eine Aufschlämmung von ausgefällten festen Farbstoffteilchen herzustellen.

22. Ein Verfahren gemäß irgend einem der Ansprüche 1 bis 21, worin die Größe der Teilchen (III) im Bereich von 0,1 bis 50 μm ist.

23. Ein Verfahren gemäß Anspruch 22, worin die Größe von mindestens 95 % der Teilchen (III) > 0,3 μm ist und die Größe von mindestens 50 % der Teilchen (III) < 10 μm ist.

24. Ein Verfahren gemäß irgend einem der Ansprüche 1 bis 23, worin die erhaltene Aufschlämmung (IV) einer Waschung und Filtrierung der Teilchen (III) unterworfen wird, um eine Aufschlämmung (IV') von Teilchen (III') zu ergeben.

25. Ein Verfahren zur Herstellung einer wäßrigen Schwefelfarbstoffdispersion (V), worin eine Aufschlämmung (IV) gemäß irgend einem der Ansprüche 1 bis 23, gegebenenfalls nach Filtrierung und Waschung gemäß Anspruch 24, zu einer Dispersion (V) verarbeitet wird.

26. Ein Verfahren gemäß Anspruch 25, worin (IV) oder (IV') mit einem oder mehreren geeigneten Dispergiermitteln und gegebenenfalls weiteren Additiven kombiniert wird und gegebenenfalls mit Wasser verdünnt und/oder einer mechanischen Zerkleinerungsbehandlung unterworfen wird.

27. Ein Verfahren gemäß Anspruch 25 oder 26, worin die Rotationsviskosität der hergestellten Dispersion (V) ≤ 500 cP ist.

28. Ein Verfahren zur Herstellung einer flüssigen Zubereitung (II') von (vor)reduziertem Schwefelfarbstoff, worin Teilchen (III') gemäß Anspruch 24 in wäßrigem Ätzalkali mit einem geeigneten Reduktionsmittel reduziert werden.

29. Ein Verfahren zur Herstellung einer getrockneten Schwefelfarbstoffzubereitung, worin eine flüssige Zubereitung (II') gemäß Anspruch 28, gegebenenfalls in Gegenwart eines Dispergiermittels und/oder Netzmittels, getrocknet wird.

30. Ein Produkt hergestellt nach dem Verfahren gemäß irgendeinem der Ansprüche 1 bis 29.

31. Eine Lösung eines reduzierten Schwefelfarbstoffes (II) hergestellt gemäß Verfahrensstufe (1), beschrieben im Anspruch 1, und der in monochromophorer Form ist.

32. Ein Schwefelfarbstoff (III') hergestellt durch Waschen und Filtrieren des Produktes (III) oder (IV) hergestellt nach dem Verfahren gemäß Anspruch 1.

33. Ein Schwefelfarbstoff (III) oder (III') gemäß Anspruch 30 oder 32 mit geringer faserschwächender Wirkung (low tendering), gewählt aus der Gruppe bestehend aus C.I. Sulphur Black 1 und C.I. Sulphur Black 2.

**34.** Ein Schwefelfarbstoff (III') gemäß Anspruch 33, mit geringer faserschwächender Wirkung (low tendering), welcher C.I. Sulphur Black 1 ist.

**35.** Ein schwarzer Schwefelfarbstoff (III') gemäß irgend einem der Ansprüche 30 und 32 bis 34, von welchem eine ausreichende Menge an gebundenem überschüssigem Schwefel und/oder freiem Schwefel entfemt worden ist, um die faserschwächende Wirkung des Farbstoffes auf Baumwolle herabzusezten.

**36.** Eine Schwefelfarbstoffdispersion (V) gemäß Anspruch 30, hergestellt durch Verarbeitung eines Schwefelfarbstoffes (III') gemäß Anspruch 32, zu einer Schwefelfarbstoffdispersion.

**37.** Eine Dispersion (V) gemäß Anspruch 30 oder 36, worin die Teilchengröße der dispergierten Teilchen ≤ 4 µm ist.

**38.** Eine flüssige Zubereitung (II) hergestellt gemäß Anspruch 28 durch Reduktion von Schwefelfarbstoff (III') gemäß irgendeinem der Ansprüche 32 bis 35.

**39.** Eine trockene Schwefelfarbstoffzusammensetzung gemäß Anspruch 29, hergestellt durch Trocknung einer flüssigen Zusammensetzung (II') gemäß Anspruch 38, gegebenenfalls in Gegenwart eines Dispergators und/oder Netzmittels.

**40.** Ein Verfahren zum Färben von Substraten, die mit Schwefelfarbstoffen färbbar sind, worin die Substrate mit Schwefelfarbstoffen gefärbt werden, welche in Form von Dispersionen (V) gemäß irgend einem der Ansprüche 30, 36 oder 37 eingesetzt werden, oder von trockenen Zusammensetzungen gemäß Anspruch 39, für den Gebrauch vorher mit Wasser verdünnt, und worin die Schwefelfarbstoffe zur Applikation in die jeweilige Leukoform reduziert werden und dann nach der Applikation oxydiert werden.

## Revendications

**1.** Un procédé de préparation d'une suspension de colorant qui comprend les étapes

(1) de traitement d'un colorant au soufre de départ (I) contenant un pont oligosulfure lié aromatiquement pouvant être réduit en groupes thiol et pouvant contenir du soufre lié présent en excès et/ou du soufre libre, dans une quantité d'un milieu réducteur aqueux contenant un agent réducteur exempt de sulfure qui est efficace pour réduire le colorant et produire une solution du colorant au soufre réduit (II), qui peut être oxydé pour former une suspension aqueuse (IV) de particules solides précipitées du colorant au soufre oxydé (III), ces particules étant plus uniformes et/ou plus molles et/ou d'une dimension moyenne plus petite et/ou contenant moins de soufre lié présent en excès et/ou de soufre libre que (I) ou que des particules qui peuvent être obtenues par oxydation d'une composition aqueuse du colorant de départ (I), et

(2) d'oxydation de la solution obtenue à l'étape (1) pour produire ladite suspension (IV) de particules solides précipitées du colorant au soufre oxydé (III).

**2.** Un procédé selon la revendication 1, dans lequel le colorant au soufre de départ (I) contient des particules solides du colorant et l'étape (1) comprend la dissolution de toutes lesdites particules.

**3.** Un procédé selon la revendication 1, dans lequel le colorant au soufre de départ (I) contient du soufre lié présent en excès et/ou du soufre libre et l'étape (1) comprend la réduction d'au moins une partie dudit soufre lié présent en excès et/ou du soufre libre.

**4.** Un procédé selon la revendication 3, dans lequel l'étape (1) comprend la réduction de tout le soufre lié présent en excès et/ou du soufre libre.

**5.** Un procédé selon la revendication 1, dans lequel le colorant au soufre de départ (I) comprend des molécules contenant au moins une paire de groupes chromophores liés ensemble par un groupe oligosulfure et l'étape (1) est effectuée pendant suffisamment de temps pour scinder lesdits groupes oligosulfure et produire une solution dans laquelle toutes les molécules du colorant (II) contiennent un seul groupe chromophore.

**6.** Un procédé selon la revendication 1, dans lequel le colorant au soufre de départ (I) est un produit brut tel qu'obtenu par réaction de thionation.

**7.** Un procédé selon la revendication 1, dans lequel le colorant de départ (I) est le colorant C.I. Sulphur Black 1.

**8.** Un procédé selon la revendication 1, dans lequel le milieu réducteur est un milieu alcalin aqueux comprenant un agent réducteur exempt de sulfure.

**9.** Un procédé selon la revendication 8, dans lequel aucun sulfure autre que celui pouvant déjà être présent dans le colorant de départ (I) est ajouté au milieu réducteur.

**10.** Un procédé selon la revendication 8, dans lequel l'agent réducteur est le borohydrure de sodium, l'α-hydroxyacétone, le dioxyde de thiourée ou un sucre réducteur.

**11.** Un procédé selon la revendication 10, dans lequel l'agent réducteur est un sucre réducteur.

**12.** Un procédé selon la revendication 1 qui est effectué en présence d'une quantité efficace d'un agent séquestrant des métaux pour diminuer la quantité des ions ferriques qui peuvent autrement contaminer le procédé.

**13.** Un procédé selon la revendication 1, dans lequel l'étape (1) est effectuée jusqu'à ce que l'équivalent de la réduction du mélange réactionnel soit supérieure à celle du produit de thionation de départ (I).

**14.** Un procédé selon la revendication 13, dans lequel l'étape (I) est effectuée jusqu'à ce que l'équivalent de la réduction du mélange réactionnel soit supérieure d'au moins 5 unités à celle du produit de thionation de départ (I).

**15.** Un procédé selon l'une quelconque des revendications 1 à 14, dans lequel à l'étape (1), le degré de réduction de (II) est dans un ordre de grandeur compris jusqu'à l'étape monochromophore.

**16.** Un procédé selon la revendication 1, dans lequel l'étape (2) est effectuée en présence d'une quantité efficace d'un agent d'oxydation.

**17.** Un procédé selon la revendication 16, dans lequel l'agent d'oxydation est l'oxygène ou une source d'oxygène.

**18.** Un procédé selon la revendication 16, dans lequel l'étape (2) est effectuée pendant suffisamment de temps pour abaisser l'équivalent de la réduction du mélange réactionnel d'oxydation à 2 ou moins.

**19.** Un procédé selon la revendication 16, dans lequel l'étape (2) est effectuée jusqu'à ce que le mélange réactionnel d'oxydation soit exempt de sulfures.

**20.** Un procédé selon la revendication 16, dans lequel l'étape (2) est effectuée jusqu'à ce que le colorant au soufre (III) ait complètement précipité.

**21.** Un procédé selon la revendication 1 pour la préparation d'une suspension aqueuse de colorant au soufre (IV) du colorant C.I. Sulphur Black 1 qui comprend les étapes

(1) de chauffage du colorant C.I. Sulphur Black 1 brut dans un milieu alcalin aqueux contenant un sucre réducteur pendant suffisamment de temps pour dissoudre toute la matière solide du colorant brut et réduire le soufre lié présent en excès et le soufre libre contenus dans le colorant,

et (2) d'oxydation de la solution résultante pendant suffisamment de temps pour produire une suspension de particules solides précipitées du colorant.

**22.** Un procédé selon l'une quelconque des revendications 1 à 21, dans lequel la dimension des particules (III) est comprise entre 0,1 et 50 µm.

**23.** Un procédé selon la revendication 22, dans lequel la dimension d'au moins 95% des particules (III) est > 0,3 µm et la dimension d'au moins 50% des particules (III) est < 10 µm.

**24.** Un procédé selon l'une quelconque des revendications 1 à 23, dans lequel la suspension (IV) obtenue est soumise à un lavage et à une filtration des particules (III) pour donner une suspension (IV') des particules (III').

**25.** Un procédé de préparation d'une dispersion aqueuse de colorant au soufre (V), dans lequel la suspension (IV) selon l'une quelconque des revendications 1 à 23, est transformée en une dispersion (V), éventuellement après filtration et lavage selon la revendication 24.

**26.** Un procédé selon la revendication 25, dans lequel (IV) ou (IV') est combinée avec un ou plusieurs agents de dispersion appropriés et éventuellement d'autres additifs et éventuellement diluée avec de l'eau et/ou soumise à un traitement mécanique de réduction de la dimension.

**27.** Un procédé selon la revendication 25 ou 26, dans lequel la viscosité de rotation de la dispersion (V) produite est ≤ 500 cP.

**28.** Un procédé de préparation d'une composition liquide (II') d'un colorant au soufre (pré)réduit, dans lequel les particules (III') selon la revendication 24 sont réduites par un agent réducteur approprié dans un hydroxyde de métal alcalin aqueux.

**29.** Un procédé de préparation d'une composition séchée d'un colorant au soufre, dans lequel une composition liquide (II') selon la revendication 28 est séchée éventuellement en présence d'un agent de dispersion et/ou d'un agent mouillant.

**30.** Un produit préparé selon le procédé de l'une quelconque des revendications 1 à 29.

**31.** Une solution d'un colorant au soufre réduit (II) préparée selon l'étape (1) du procédé spécifiée à la revendication 1 et qui est sous forme monochromophore.

32. Un colorant au soufre (III') préparé par lavage et filtration du produit (III) ou (IV) préparé selon le procédé de la revendication 1.

33. Un colorant au soufre à faible effet d'affaiblissement des fibres (III) ou (III') selon la revendication 30 ou 32 choisi parmi le groupe comprenant les colorants C.I. Sulphur Black 1 et C.I. Sulphur Black 2.

34. Un colorant au soufre (III') selon la revendication 33 à faible effet d'affaiblissement des fibres qui est le colorant C.I. Sulphur Black 1.

35. Un colorant au soufre noir (III') selon l'une quelconque des revendications 30 et 32 à 34, duquel a été retirée une quantité suffisante de soufre lié présent en excès et/ou de soufre libre pour réduire l'effet d'affaiblissement des fibres, du colorant sur le coton.

36. Une dispersion (V) d'un colorant au soufre selon la revendication 30 obtenue par transformation du colorant au soufre (III') selon la revendication 32 en une dispersion d'un colorant au soufre.

37. Une dispersion (V) selon la revendication 30 ou 36, dans laquelle la dimension des particules des particules dispersées est $\leq 4\ \mu m$.

38. Une composition liquide (II') préparée selon la revendication 28 par réduction d'un colorant au soufre (III') selon l'une quelconque des revendications 32 à 35.

39. Une composition sèche d'un colorant au soufre selon la revendication 29, obtenue par séchage d'une composition liquide (II') selon la revendication 38, éventuellement en présence d'un agent de dispersion et/ou d'un agent mouillant.

40. Un procédé de teinture de substrats susceptibles d'être teints avec des colorants au soufre, dans lequel les substrats sont teints avec des colorants au soufre qui sont utilisés sous forme de dispersions (V) selon l'une quelconque des revendications 30, 36 ou 37, ou de compositions sèches selon la revendication 39 préalablement diluées avec de l'eau pour l'utilisation et dans lequel les colorants au soufre sont réduits en la forme leuco correspondante pour l'application et sont ensuite oxydés après l'application.